(19) Europäisches Patentamt
European Patent Office
Office européen des brevets

(11) Veröffentlichungsnummer: **0 131 916**
**A2**

(12) # EUROPÄISCHE PATENTANMELDUNG

(21) Anmeldenummer: **84108197.9**

(22) Anmeldetag: **12.07.84**

(51) Int. Cl.[4]: **H 02 G 1/00**

(30) Priorität: **13.07.83 CH 3833/83**

(43) Veröffentlichungstag der Anmeldung:
**23.01.85 Patentblatt 85/4**

(84) Benannte Vertragsstaaten:
**AT DE FR GB IT**

(71) Anmelder: **Reichle + De-Massari AG Elektroingenieure**
**Binzstrasse 31**
**CH-8620 Wetzikon(CH)**

(72) Erfinder: **Reichle, Hans**
**Guldislooweg 16**
**CH-8620 Wetzikon ZH(CH)**

(74) Vertreter: **Petschner, Goetz**
**Patentanwaltsbüro G. Petschner Seidengasse 18**
**CH-8001 Zürich(CH)**

(54) **Werkzeug zur Herstellung einer Steckverbindung zwischen einem Kunststoff-Rohr und einem Kunststoff-Gehäuse für elektrische Anschlussmittel.**

(57) Das Werkzeug zur Herstellung einer Steckverbindung zwischen einem Kunststoff-Rohr (1) und einem Kunststoff-Gehäuse (2) für elektrische Anschlussmittel, umfasst einen zum Umgeben des Rohrmantels bestimmten, relativ zum Rohr verdrehbaren Schneidkopf (30), in dessen Innenraum ein erstes Messer zum Anfasen des vom Schneidkopf umgebenen Rohres sowie ein von ersterem distanziertes zweites Messer zum Einschneiden einer tannenzapfenförmigen Rippe in den Mantel des Rohres hineinragt, wobei der Schneidkopf (30) drehfest mit dem einen Ende eines stabförmigen Handgriffs (40) verbunden ist, der an seinem anderen Ende einen der Herstellung der Passbohrung in die Wandung des Gehäuses dienenden Bohrkopf (20) trägt.

Der Bohrkopf (20) umfasst dabei eine, an der einen Stirnseite eines Stahl-Hohlzylinders (21) ausgebildete Schneide (22), wobei der Hohlzylinder (21) mit seinem anderen Ende fest mit dem Handgriff (40) verbunden ist und von dessen betreffender Stirnseite abragt und wobei sich innerhalb des Hohlzylinders (21) und zentrisch im Handgriff (40) ein gegen die Wirkung einer Feder (25) verschiebbarer Schutz- und Zentrierstössel (26) erstreckt, der an seinem freien Ende eine Druckplatte (28) bildet, die im Normalzustand des Werkzeuges die Schneide (22) am Hohlzylinder (21) überragt.

Dies ergibt ein Werkzeug mit einem ausgezeichneten Handling, unter Berücksichtigung der notwendigen Sicherheitsvorkehrungen.

FIG.1

42'
35'
34
40
4
41
1
21
22
24
23
25
43
35
3
2
28
26
27
47
29
33
5
36
20
42
30

EP 0 131 916 A2

Croydon Printing Company Ltd

0131916



Reichle + De Massari AG, Wetzikon/Schweiz

# Werkzeug zur Herstellung einer Steckverbindung zwischen einem Kunststoff-Rohr und einem Kunststoff-Gehäuse für elektrische Anschlussmittel

Die vorliegende Erfindung betrifft ein Werkzeug zur Herstellung einer Steckverbindung zwischen einem Kunststoff-Rohr und einem Kunststoff-Gehäuse für elektrische Anschlussmittel, mit einem zum Umgeben des Rohrmantels bestimmten, relativ zum Rohr verdrehbaren Schneidkopf, in dessen Innenraum ein erstes Messer zum Anfasen des vom Schneidkopf umgebenen Rohres sowie ein von ersterem distanziertes zweites Messer zum Einschneiden einer tannenzapfenförmigen Rippe in den Mantel des Rohres hineinragt, wobei der Schneidkopf drehfest mit dem einen Ende eines stabförmigen Handgriffs verbunden ist, der an seinem anderen Ende einen der Herstellung der Passbohrung in die Wandung des Gehäuses dienenden Bohrkopf trägt.

Beim Verlegen von elektrischen Anschlussmitteln auf Schalungen vor dem Einbetonieren oder bei der Erstellung von Hohlwänden stellt sich das Problem der sicheren Fixierung der in sogenannte Einlasskästen mündenden, der späteren Kabelführung dienenden Rohre, die in der Regel aus Kunststoff bestehen und eine sehr glatte Mantelfläche aufweisen. Die sichere Fixierung ist notwendig, um ein Verschieben der Rohre beim späteren Kabeleinzug bzw. beim Einschütten und Vibrieren der Betonmasse zu vermeiden. Zudem sollen die Steckverbindungsstellen möglichst dicht sein.

Durch die Anmelderin ist nun bereits ein Werkzeug der vorgenannten Art bekannt geworden, mit dem am Rohrende eine Anfasung angebracht und distanziert vom Rohrende in den Rohrmantel eine tannenzapfenförmige Rippe eingeschnitten wird, derart, dass sich die Rippe beim teilweise Wiederherausziehen des in eine in den Einlasskasten eingeschnittene Passbohrung eingeführten Rohrendes an der Wandung des Einlasskastens aufstellt und als Anschlag wirksam wird. Dadurch ist es dann nicht mehr möglich, dass sich das Ende des durch das

Einschütten von Beton oder durch den Kabeleinzug belasteten Rohres aus dem Einlasskasten herausbewegen kann, da die tannenzapfenförmige Rippe einen wirksamen Anschlag bildet. Das Zusammenwirken von Passbohrung, Rohr und Rippe ergeben zudem einen ausreichend dichten Abschluss gegen das Eindringen von Feuchtigkeit in den Einlasskasten. Hierbei erleichtert die Anfasung am Rohrende das Einstossen des Rohres in die Passbohrung.

Problematisch bei einem solchen Werkzeug ist jedoch der Bohrkopf zur Herstellung der Passbohrung im Kunststoff-Gehäuse, das neben dem vorerwähnten Einlasskasten auch eine beliebige andere Dose für elektrische Installationen sein kann. Problematisch sowohl inbezug auf eine für den Benützer hohe Verletzungsgefahr am offenen Bohrkopf bzw. dessen leichtes Beschädigen, als auch inbezug auf ein sicheres, zentriertes Ansetzen des Bohrkopfes an der in der Regel sehr glatten Wandung des Gehäuses. Auch hier besteht durch ein Abrutschen des Bohrkopfes eine relativ hohe Verletzungsgefahr.

Es ist deshalb Aufgabe der vorliegenden Erfindung, das Werkzeug der vorgenannten Art so auszugestalten, dass ein ausreichender Schutz des Bohrkopfes gegen Beschädigungen, ein Schutz gegen Verletzungen des Benützers am Bohrkopf und ein sicherer Ansatz des Bohrkopfes an der Gehäusewandung gewährleistet werden kann.

Dies wird nun erfindungsgemäss dadurch erreicht, dass der Bohrkopf eine, an der einen Stirnseite eines Stahl-Hohlzylinders ausgebildete Schneide umfasst, wobei der Hohlzylinder mit seinem anderen Ende fest mit dem Handgriff verbunden ist und von dessen betreffender Stirnseite abragt und wobei sich innerhalb des Hohlzylinders und zentrisch im Handgriff ein gegen die Wirkung einer Feder verschiebbarer Schutz- und Zentrierstössel erstreckt, der an seinem freien Ende eine Druckplatte bildet, die im Normalzustand des Werkzeuges die Schneide am Hohlzylinder überragt.

Durch diese Massnahmen wird nun zunächst erreicht, dass sich ein das Werkzeug aufnehmender Benützer nicht mehr am Bohrkopf verletzen kann, da die Schneide von der Druckplatte überragt wird. Diese Anordnung verhindert aber auch eine Beschädigung der Bohrkopfschneide.

Weiter wird in vorteilhafter Weise erreicht, dass das Werkzeug nunmehr durch die Druckplatte ganz präzise am gewünschten Ort aufsetzbar ist und die Schneide relativ sanft und ohne zu haken an der Gehäusewandung wirksam werden kann.

Hierbei ergibt sich eine einfache, funktionssichere und leicht herstellbare Konzeption des erfindungsgemässen Werkzeuges dann, wenn die äussere Endlage des Stössels bzw. dessen Druckplatte durch einen inneren Endflansch am Stössel begrenzt wird, der mit einer inneren Ringschulter in der Führungsbohrung für den Stössel im Handgriff zusammenwirkt, und ferner, wenn sich dann an der inneren Ringschulter in der Führungsbohrung des Handgriffes für den Stössel das eine Ende der Feder abstützt, deren anderes Ende an einer Ringschulter des Stössels angreift.

Ferner ergibt sich ein ergonomisches Handling des Werkzeuges dann, wenn der Handgriff griffseitig für den Bohrkopf im Querschnitt eine ovale oder eliptische Form aufweist und griffseitig für den Schneidkopf von geringerem und wenigstens angenähert rundem Querschnitt ist, wobei die Uebergangsbereiche vom kleineren Griffumfang zum grösseren Griffumfang Anschlagflächen für die den kleineren Griffumfang umschliessende Hand bilden.

Dies gestattet mit der umfassenden Hand einerseits rutschfrei ein hohes Drehmoment auf den Bohrkopf zu übertragen und andrerseits einen hohen axialen Druck des Schneidkopfes gegen das Rohr zu ermöglichen.

Eine beispielsweise Ausführungsform des Erfindungsgegenstandes ist nachfolgend anhand der Zeichnung näher erläutert. Es zeigen:

Fig. 1 in schaubildartiger Darstellung das erfindungsgemässe Werkzeug;

Fig. 2 eine Draufsicht auf den die Schneide des Werkzeuges gemäss Fig. 1 bildenden Stahl-Hohlzylinder ; und

Fig. 3 im Schnitt eine Ausführungsvariante eines Details der Anordnung gemäss Fig 1.

Gemäss der Darstellung umfasst das erfindungsgemässe Werkzeug zur Herstellung einer Steckverbindung zwischen einem Kunststoff-Rohr 1 und einem Kunststoff-Gehäuse 2 für elektrische Anschlussmittel in bekannter Weise einen Bohrkopf 20 zur Herstellung einer Passbohrung 3 in die Wandung des Gehäuses 2 sowie einen Schneidkopf 30 zur gleichzeitigen Herstellung einer Anfasung 5 sowie zum Einschneiden der tannenzapfenartigen Rippe 4 am Rohr 1.

Der Bohrkopf 20 und der Schneidkopf 30 sind je in der nachfolgend noch näher beschriebenen Weise drehfest an je einem Ende eines stabförmigen Handgriffes 40 befestigt, der aus geeignetem Material, beispielsweise Kunststoff, besteht. Hierbei ist dieser stabförmige Handgriff erfindungsgemäss ergonomisch so ausgestaltet, dass dieser griffseitig 41 für den Bohrkopf 20 im Querschnitt eine etwa ovale Form aufweist, was gestattet, mit der umfassenden Hand rutschfrei ein hohes Drehmoment auf den Bohrkopf 20 zu übertragen. Griffseitig 42 für den Schneidkopf 30 hingegen ist der Handgriff 40 von geringerem und rundem Querschnitt, wobei die Uebergangsbereiche 42' zur Griffseite 41 hin einen Anschlag für die umfassende Hand bilden, was gestattet, in Richtung des anzufasenden Rohres 1 einen hohen axialen Druck auszuüben, um das Rohr 1 am inneren Anschlag 33 des Schneidkopfes 30 zu halten.

Der Schneidkopf 30 umfasst hier eine zentrische Bohrung 31 von angenähert dem üblichen Rohrdurchmesser, die an einer Ringschulter endet, die den vorgenannten Anschlag 33 bildet. In einer Ebene anschliessend an der Ebene des Anschlages 33 erstreckt sich radial nach innen ein erstes Messer 34, dessen Schneide so ausgebildet ist, dass auf eine relative Drehung zwischen Rohr 1 und Schneidkopf 30 am Rohrende die Anfasung 5 angeschnitten wird. Die Schnittkante dieses Messers kann aber auch so sein, dass diese gleichzeitig eine Plandrehung des Rohrendes und eventuell auch eine innere Anfasung oder Entgratung des Rohres bewirkt. Der hierbei entstehende Materialspan fällt in einen Span-Aufnahmeraum 35 im Inneren des Schneidekopfes 30 und kann diesen durch eine Oeffnung 35' im Handgriff 40 verlassen. Um einige Millimeter axial distanziert und radial um 180$^{o}$ versetzt vom ersten Messer 34 erstreckt sich radial nach innen ein zweites Messer 36, welches dem Anschneiden des Rohrmantels zur Bildung der tannenzapfenförmigen Rippe 4 dient. Wie aus der Zeichnung ersichtlich, ist dieses Messer sichelartig derart ausgebildet, dass sich das beim Einschneiden der Rippe auswölbende Material des Rohres 1 in eine Aussparung des Messers 36 hineinbewegen kann.

Für eine Bearbeitung des Rohres 1 mit dem vorbeschriebenen Schneidkopf 30 wird das auf vorgegebene Länge abgetrennte Rohr 1 mit seinem Ende in den Schneidkopf 30 eingestossen, wobei das vorstehende Messer 34, das in radialer Richtung relativ schmal ist, praktisch keinen Widerstand darstellt und höchstens zu einem vernachlässigbaren Eindrücken einer Rille in den Rohrmantel führt. Darauf erfolgt eine Relativverdrehung zwischen Rohr und Schneidekopf um 360°, wobei das erste Messer 34 von der Stirnseite einen Span abdreht und das zweite Messer 36 die tannenzapfenförmige Rippe 4 am Rohrmantel ausschneidet.

Der Bohrkopf 20 umfasst nun erfindungsgemäss eine, an der einen Stirnseite eines Hohlzylinders 21 aus einem geeigneten Stahl in geeigneter Weise angeschliffene Schneide 22. Der Durchmesser dieser Schneide 22 bzw. des Hohlzylinders 21 entspricht natürlich praktisch dem Durchmesser des Rohres 1. Aus der Zeichnung ist dabei entnehmbar, dass dieser Hohlzylinder 21 von der betreffenden Stirnseite des Handgriffes 40 abragt und im Handgriff in einer Ringnut 23 fest verankert ist. Hierbei können nicht näher gezeigte Feststellschrauben ein Auswechseln des Hohlzylinders 21 gestatten. Die freie Mantelfläche des Hohlzylinders 21 ist zweckmässig mit geeigneten Entspannungsschlitzen 24 versehen.

Innerhalb des Hohlzylinders 21 und zentrisch im Handgriff 40 axial gegen die Wirkung einer Feder 25 verschiebbar geführt ist nun ein Schutz- und Zentrierstössel 26 in einer Führungsbohrung 47 im Handgriff 40 abgestützt. Dieser Stössel 26 weist an seinem freien Ende eine Druckplatte 28 auf, die im Normalzustand des Werkzeuges die Schneide 22 des Hohlzylinders 21 überragt, also aus letzterem vorsteht und so eine verletzende Berührung der Schneide 22 verhindert. Der Durchmesser dieser Druckplatte 28 entspricht angenähert dem Innendurchmesser des Hohlzylinders 21. Die äussere Endlage der Druckplatte 28 wird durch einen inneren Endflansch 29 am Stössel 26 begrenzt, der mit einer inneren Ringschulter 43 in der Führungsbohrung 47 des Handgriffes 40 zusammenwirkt. An dieser Ringschulter 43 stützt sich zudem das eine Ende der den Stössel 26 nach aussen drückenden Feder 25 ab, deren anderes Ende mit einer Ringschulter 27 am Stössel 26 zusammenwirkt.

Wie nun ohne weiteres aus der Darstellung erkennbar, wird zur Herstellung der Passbohrung 3 im Gehäuse 2 das Werkzeug zunächst mit der Druckplatte 28 des Stössels 26 auf die Wandung des Gehäuses 2 aufgesetzt, um dann unter gleichzeitiger Drehung einen axialen Druck am Handgriff 40 auszuüben, wobei eine axiale Relativverschiebung zwischen der Druckplatte 28 und dem Hohlzylinder 21 stattfindet und die Schneide 22 relativ sanft und ohne zu haken an der Gehäusewandung wirksam wird.

Es ist leicht einzusehen, dass dabei das Werkzeug durch die Druckplatte 28 ganz präzise am gewünschten Ort aufsetzbar ist. Gegebenenfalls kann die Druckplatte 28 auch noch mit einer kleinen Zentrierspitze (nicht gezeigt) versehen werden, die in einer Körnervertiefung angesetzt werden könnte.

Weiter kann es vorteilhaft sein, die Stirnseite der Druckplatte 28 noch mit einem Antirutschbelag zu versehen.

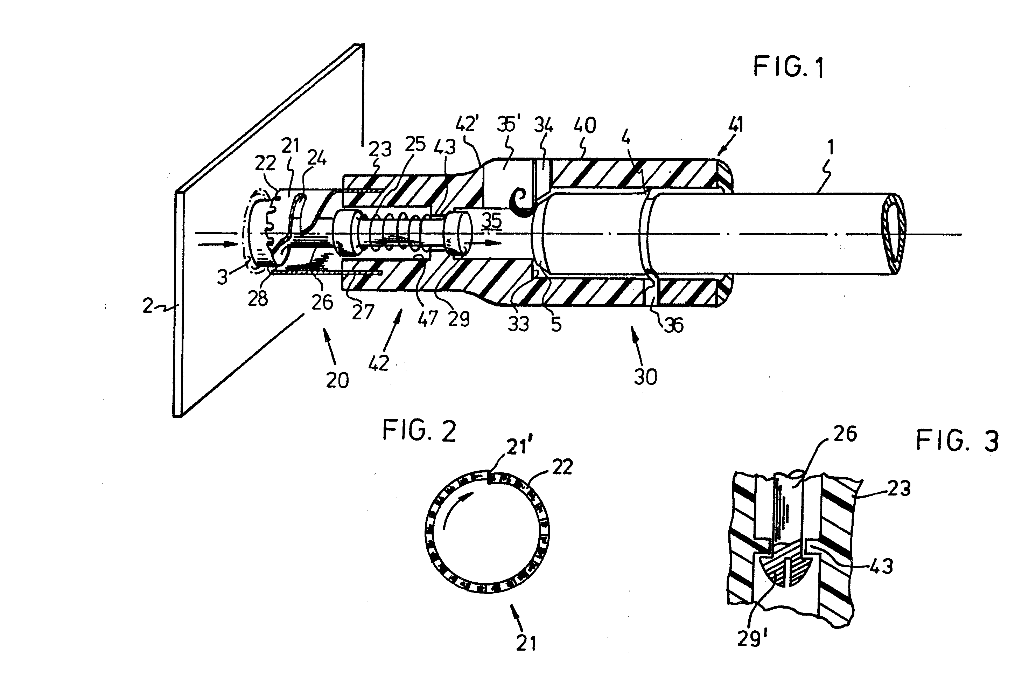

Weiter kann der aus Stahl bestehende Hohlzylinder 21 gerollt sein und der Mantel dann entlang einer Längsmantelnaht stumpf aneinanderstossen. Gemäss Fig.2 können dabei die beiden aneinanderstehenden Längskanten radial gegeneinander versetzt sein, womit eine gegebenenfalls konische Schnittkante 21' entsteht, die ein Toleranzen ausgleichendes Nachschneiden erlaubt.

Ferner lässt sich die Montage des Stössels 26 wesentlich vereinfachen, wenn gemäss Fig. 3 der innere Endflansch 29 als ein geschlitzter, einfedernder Kopf 29' ausgebildet wird.

Aus dem Vorbeschriebenen ergibt sich somit ein Werkzeug zur Herstellung einer Steckverbindung zwischen einem Kunststoff-Rohr und einem Kunststoff-Gehäuse für elektrische Anschlussmittel mit einem ausgezeichneten Handling, unter Berücksichtigung der notwendigen Sicherheitsvorkehrungen.

Patentansprüche

1. Werkzeug zur Herstellung einer Steckverbindung zwischen einem Kunststoff-Rohr und einem Kunststoff-Gehäuse für elektrische Anschlussmittel, mit einem zum Umgeben des Rohrmantels bestimmten, relativ zum Rohr verdrehbaren Schneidkopf, in dessen Innenraum ein erstes Messer zum Anfasen des vom Schneidkopf umgebenen Rohres sowie ein von ersterem distanziertes zweites Messer zum Einschneiden einer tannenzapfenförmigen Rippe in den Mantel des Rohres hineinragt, wobei der Schneidkopf drehfest mit dem einen Ende eines stabförmigen Handgriffs verbunden ist, der an seinem anderen Ende einen der Herstellung der Passbohrung in die Wandung des Gehäuses dienenden Bohrkopf trägt; dadurch gekennzeichnet, dass der Bohrkopf (20) eine, an der einen Stirnseite eines Stahl-Hohlzylinders (21) ausgebildete Schneide (22) umfasst, wobei der Hohlzylinder (21) mit seinem anderen Ende fest mit dem Handgriff (40) verbunden ist und von dessen betreffender Stirnseite abragt und wobei sich innerhalb des Hohlzylinders (21) und zentrisch im Handgriff (40) ein gegen die Wirkung einer Feder (25) verschiebbarer Schutz- und Zentrierstössel (26) erstreckt, der an seinem freien Ende eine Druckplatte (28) bildet, die im Normalzustand des Werkzeuges die Schneide (22) am Hohlzylinder (21) überragt.

2. Werkzeug nach Anspruch 1, dadurch gekennzeichnet, dass die äussere Endlage des Stössels (26) bzw. dessen Druckplatte (28) durch einen inneren Endflansch (29) am Stössel begrenzt ist, der mit einer inneren Ringschulter (43) in der Führungsbohrung (47) für den Stössel im Handgriff (40) zusammenwirkt.

3. Werkzeug nach Anspruch 1 und 2, dadurch gekennzeichnet, dass sich an der inneren Ringschulter (43) in der Führungsbohrung (47) des Handgriffes (40) für den Stössel (26) das eine Ende der Feder (25) abstützt, deren anderes Ende an einer Ringschulter (27) des Stössels angreift.

4. Werkzeug nach Anspruch 1, dadurch gekennzeichnet, dass der Handgriff (40) griffseitig (41) für den Bohrkopf (20) im Querschnitt eine ovale oder eliptische Form aufweist und griffseitig (42) für den Schneidkopf (30) von geringerem und wenigstens angenähert rundem Querschnitt ist, wobei die Uebergangsbereiche (42') vom kleineren Griffumfang (42) zum grösseren Griffumfang (41) Anschlagflächen für die den kleineren Griffumfang umschliessende Hand bilden.

0131916

FIG.1
FIG. 2
FIG. 3
1
2
3
4
5
20
21
21'
22
23
24
25
26
27
28
29
29'
30
33
34
35
35'
36
40
41
42
42'
43
47